# EUROPÄISCHE PATENTSCHRIFT

(11) **EP 2 497 621 B1**
(45) Veröffentlichungstag und Bekanntmachung des Hinweises auf die Patenterteilung: **19.12.2018**
(21) Anmeldenummer: 12157689.6
(22) Anmeldetag: 01.03.2012
(51) Int. Cl.: B29C 65/22, B29C 65/38, B29C 65/18, B65B 57/08, F16P 3/12

(54) **Verfahren zum Betreiben einer Schweißvorrichtung, insbesondere eines wärmeimpulsgesteuerten und/oder dauerbeheizten Folienschweiß- und/oder Heißsiegelgerätes mit vorwählbarer elektronischer, prozessorgesteuerter Anpreßdruck- und Temperaturregelung und Vorrichtung hierzu**
Method for operating a welding device, in particular a thermal pulse controlled and/or continuously heated film welding and/or heat sealing device with pre-selected electronic process-controlled pressure and temperature control and device therefor
Procédé pour faire fonctionner un dispositif de soudage, notamment un appareil de soudage de feuilles et/ou de thermoscellage commandé par impulsions de chaleur et/ou chauffé dans la durée, équipé d'une régulation, présélectionnable, électronique et commandée par processeur, en pression et en température, ainsi que dispositif correspondant

(30) Priorität: 09.03.2011 DE 102011001167
(43) Veröffentlichungstag der Anmeldung: 12.09.2012
(73) Patentinhaber: Rische + Herfurth GmbH, 22041 Hamburg (DE)
(72) Erfinder: Gödicke, Bernhard, 22527 Hamburg (DE); Nitsch, Ralf, 22525 Hamburg (DE); Schewe, Dirk, 25469 Halstenbek (DE); Symanzik, Jürgen, 25451 Quickborn (DE)
(74) Vertreter: RGTH

(56) Entgegenhaltungen:
- EP-A2- 0 280 661
- WO-A1-2010/129569
- DE-A1- 2 520 475
- DE-B3-102011 110 620
- DE-U1- 20 111 126
- GB-A- 2 107 669
- US-A- 2 719 567
- US-A- 4 553 373
- US-A- 4 650 535
- US-A- 5 321 230
- US-A1- 2007 251 190

## Beschreibung

### Technisches Gebiet

Die Erfindung betrifft ein Verfahren nach dem Oberbegriff des Anspruches 1. Weiterhin betrifft die Erfindung eine Vorrichtung nach Anspruch 11. Bei Folienschweißvorrichtungen zum Verschweißen von Folien in z.B. Schlauch- und/oder Beutelform oder anderer verschweißbarer Materialien (z.B. innenbeschichtete Alu- und/oder Papierverbundfolien) besteht das Problem, dass innerhalb des Verfahrweges eine Blockade eines verfahrbaren Heizbandträgers stattfinden kann. Bei der Verwendung von Schrittmotoren ist dies durch die Blockaden hervorgerufener Schrittverluste sehr nachteilig. Diese unzulässige Klemmung, z.B. der Folie, ist daher zu vermeiden.

### Stand der Technik

Aus der DE 40 34 044 A1 ist ein Verfahren zur Herstellung von Kunststoffbeuteln mit einer Schweißeinrichtung bekannt, wobei ein Beutelautomat mit großer Geschwindigkeit Verwendung findet. Diese umfasst einen Servomotor sowie eine Rechnersteuerung. An Vorzugswalzen ist ein Geber angeschlossen, der Steuerimpulse abnimmt und der Rechnersteuerung zuführt.

In der DE 42 41974 C1 ist eine Vorrichtung zur Steuerung von Schweißwerkzeugen an Folienschweißmaschinen mit einem durch Schrittmotoren angetriebenen Schweißbalken gezeigt und beschrieben. Damit bei vergleichsweise hoher Leistung z.B. als Beutelautomat mit großen Geschwindigkeiten eine äußerst feinfühlige Einstellung des Schweißdrucks gewährleistet wird, ist ein Antriebsorgan von einem Schraubgewinde gebildet. Entsprechend einer Stromaufnahme der Motoren ist der Schweißdruck an der Kunststofffolie einstellbar.

Die DE 103 08 345 B4 beschreibt eine Schweißvorrichtung mit zwei Heizbändern, von denen das eine als Arbeitsband und das andere als Messband dient. Eine Regelung nutzt eine Dehnung, wobei Halleffekt-Sensoren eingesetzt sind.

Weiterhin ist aus der DE 20 2008 017 648 U1 eine Verpackungsmaschine mit Mitteln zum Verschließen eines Verpackungsbeutels, und zwar mittels Kaltversiegelung bekannt. Durch einen Drucksensor wird ein Verschließdruck erfasst.

Die US 4,650,535 B offenbart eine verbesserte Versiegelungsvorrichtung mit einer L-förmigen Versiegelungsbettanordnung, welche an ihren Enden und an der Ecke an drei Kolben-Zylinder-Anordnungen befestigt ist. Ein Versiegelungsarm wird in die Nähe der Versiegelungsbettanordnung geführt, und die Versiegelungsbettanordnung wird mittels der Kolben-Zylinder-Anordnungen in gleichmäßigen und kontinuierlichen Oberflächenkontakt mit der Heizdrahtanordnung des Versiegelungsarmes gebracht.

Aus der DE 25 20 475 A1 ist eine Schutzvorrichtung für einen Schweißbacken bekannt. Zur Herstellung einer folienförmiges Material verbindenden Schweißnaht führt ein erster Schweißbacken eine Schließbewegung aus und wird im Bereich einer Quetschstelle gegen einen zweiten Schweißbacken gepresst.

Die EP 0 280 661 A2 offenbart eine Vorrichtung zur automatischen Verpackung von Gütern in den verschiedenen Formen der Güter angepassten Plastikbeuteln. Die Plastikbeutel werden bei Bedarf an einer Supermarktkasse hergestellt.

Eine Vorrichtung zur Hitzeversiegelung ist aus der US 2,719,567 B bekannt. Die Vorrichtung produziert Hitzesiegel mit Materialien aus Polyethylen oder ähnlichen Materialien.

Ein Verfahren und eine Vorrichtung zum selektiven Zugriff auf eine Teilprobe eines tiefgefrorenen Samples, wie beispielsweise Nabelschnurblut, wird in der WO 2010/129569 A1 beschrieben. Eine Wärmequelle kann ausgebildet sein, eine Teilprobe des Samples von dem Rest des Samples abzutrennen, wobei der Rest des Samples im tiefgekühlten Zustand verbleibt.

Die Schrift US 2007/0251190 A1 offenbart eine Vorrichtung zum Aufblasen und Versiegeln von Verpackungskissen. Die Vorrichtung benutzt eine Einheit, welche dazu ausgebildet ist, Informationen von einem vorbereiteten Filmmaterial zu erhalten und automatisch einen oder mehrere Betriebsparameter festzusetzen, um den Film aufzublasen und zu versiegeln.

Aus der GB 2 107 669 A ist eine Vorrichtung zur Bündelung von Banknoten bekannt. Wird ein Bündelungsvorgang inkorrekt ausgeführt, so schaltet ein Fehlersignal die Vorrichtung ab.

Die US 4,553,373 B offenbart ein Verfahren, eine Vorrichtung und ein Erzeugnis, bei dem Bereiche eines wärmeversiegelnden Verpackungsmaterials über das Erzeugnis gezogen werden, um das Erzeugnis isoliert zu verpacken. Das Verpackungsmaterial liegt eng an dem zu verpackenden Erzeugnis an und entspricht der Form des Erzeugnisses.

Aus der DE 698 20 028 T ist ein Verfahren zum Überwachen der Querverschweißung in einer Verpackungseinheit bekannt. Ein neuronales Netzwerk wird eingesetzt, um Versiegelungszustände zu korrigieren.

Die DE 38 78 318 T2 offenbart eine Verpackungsmaschine mit einem Apparat für die variable Verstellung der Siegelbacken.

Aus der DE 694 18 297 T2 ist eine Verpackungsmaschine und deren Arbeitsweise bekannt. Zur Feststellung eines unnormalen Zustands wird zunächst ein Standardwert einer physikalischen Variablen durch Versiegeln von leeren Tüten bestimmt.

### Darstellung der Erfindung: Aufgabe, Lösung, Vorteile

Der Erfindung liegt die Aufgabe zugrunde, ein Verfahren und eine Vorrichtung zu schaffen, die Störungen, wie eine Blockade eines beweglichen Heizbandträgers während einer Verfahrbewegung automatisch berücksichtigt. Weiterhin soll die Erfindung eine vorwählbare Anpreßdruck- und Temperaturregelung ermöglichen sowie eine laufende Überwachung und Protokollierung des gesamten Schweißvorgangs erlauben.

Diese Aufgabe wird durch die Merkmale der unabhängigen Ansprüche erreicht.

Erfindungsgemäß wird ein Schweißverfahren für eine Schweißvorrichtung zum Verschweißen von verschweißbaren Materialien mit einem ersten beweglichen Heizbandträger, der ein Heizelement trägt, und mit einem zweiten, unbeweglichen Heizbandträger, an dem ein zweites Heizelement oder ein unbeheiztes Element angeordnet ist, wobei unter dem unbeweglichen Heizbandträger mit einer Überwachungssteuerung verbundene Drucksensoren angeordnet sind, wobei der erste bewegliche Heizbandträger durch einen Antrieb mindestens einer Positioniereinheit zwischen einer Öffnungsstellung und einer Schweißstellung verfahren wird, wobei eine Bewegung zwischen der Öffnungsstellung und der Schweißstellung mit den Drucksensoren überwacht wird, wobei die Drucksensoren an die Überwachungssteuerung ein oder mehrere Signale ausgeben, wenn ein nicht-zulässiger Betrieb vorliegt, vorgeschlagen, wobei verfahrensgemäß ein nicht-zulässiger Betrieb vorliegt, wenn innerhalb der Bewegung zwischen der Öffnungsstellung und der Schweißstellung ein Druckanstieg des unbeweglichen Heizbandträgers durch die Drucksensoren festgestellt wird, und wobei eine Positionserkennung des beweglichen Heizbandträgers durch eine laufende optische Überwachung des Verfahrweges erfolgt.

Durch die Erfindung wird eine nicht zugelassene Klemmung erkannt. Nur bei nicht vorhandener Störung des beweglichen Heizbandträgers und Drucklosigkeit des unbeweglichen Heizbandträgers wird ein Positionierprozess beendet und ein Schweißvorgang ausgelöst. Dieser Schutz gewährleistet, dass keine Beschädigungen an den Heizelementen bzw. der Folie oder z.B. an einem Finger einer Bedienperson entstehen. Ebenfalls wird durch die Erfindung ermöglicht, daß die Schweißtemperatur und -dauer sowie der Anpreßdruck des beweglichen auf den unbeweglichen Heizbandträger voreinstellbar ist und im Verlauf des Schweißvorgangs überwacht, elektronisch geregelt und protokolliert wird.

Weitere vorteilhafte Ausgestaltungen der Erfindung sind in den Unteransprüchen gekennzeichnet.

In einer vorteilhaften Weiterbildung des erfindungsgemäßen Verfahrens ist vorgesehen, dass der nicht-zulässige Betrieb eine Blockade des beweglichen Heizbandträgers ist. Insbesondere sind eine Blockade des beweglichen Heizbandträgers, ein unzulässiger Druckanstieg des unbeweglichen Heizbandträgers und ein zu frühes Aufheizen des/r Heizelemente/s bzw. ein Aufheizen außerhalb der Schweißposition zu vermeiden, da es sonst zu Verbrennungen führen kann.

Vorteilhaft ist, wenn der bewegliche Heizbandträger automatisch in eine Nullposition und/oder Öffnungsstellung zurückfährt, wenn der nicht-zulässige Betrieb vorliegt. Ein Verfahren des beweglichen Heizbandträgers in die Nullposition ist bei erkannten Schrittverlusten eines Schrittmotors zweckmäßig.

Bei einer weiteren vorteilhaften Ausführung der Erfindung erfolgt eine Feststellung des zulässigen Betriebs durch eine Anpressdruckmessung. Innerhalb des Verfahrwegs muss der unbewegliche Heizbandträger drucklos sein. Wird ein Druckanstieg festgestellt, dann deutet dies auf eine nicht zugelassene Klemmung hin, wobei der bewegliche Heizbandträger automatisch in die Nullposition zurückfährt. Für das Schweißgerät bzw. die Vorrichtung sind unter dem unbeweglichen Heizbandträger angeordnete Drucksensoren vorgesehen, die vorzugsweise den Anpressdruck feststellen, woraus über eine entsprechende Programmsteuerung ein Signal für den Schrittmotor entwickelt wird.

Bevorzugterweise wird zur Druckmessung ein Sensor verwendet, der aus einem Wägezellenpaar besteht, wobei jeweils eine Wägezelle im Bereich eines der Enden des unbeweglichen Heizbandträgers angeordnet ist. Eine Wägezelle umfasst einen Dehnungsmessstreifen, so dass über die Dehnung des Dehnungsmessstreifens in bekannter Art und Weise die Druckmessung erfolgt. Diese Wägezellenanordnung erfasst den genauen Druck an jeder beliebigen Stelle entlang des unbeweglichen Heizbandträgers, so dass ein genauer Vergleich mit einem Sollwert möglich ist.

In einer weiteren vorteilhaften Weiterbildung des erfindungsgemäßen Verfahrens ist vorgesehen, dass zur Feststellung des zulässigen Betriebs eine optische Messung, insbesondere zur laufenden optischen Überwachung eines Verfahrweges, erfolgt. Vorzugsweise ist der Sensor als eine einen Balkencode abtastende Lichtschranke ausgeführt. Dadurch ist eine Positionserkennung für den beweglichen Heizbandträger vorgesehen. Hierzu kann beispielsweise eine bedruckte durchsichtige Folie oder ein Lochblechstreifen angeordnet sein, die mit verschieden starken Strichen versehen sind, so dass sich durch eine entsprechende Optik immer die Position des beweglichen Heizbandträgers feststellen lässt.

Alternativ zur dieser optischen Messung kann eine Überwachung des linearen Verfahrweges durch einen anderen Wegsensor erfolgen. Möglich wäre ebenfalls der Einsatz eines Inkrementalwertgebers, eines Absolutwertgebers, eines Potentiometers, eines mechanischen Abtastesystems beispielsweise mit Mikroschaltern oder Reedkontakten, eine Lichtintensitätsmessung, beispielsweise eine Fotozelle im sichtbaren oder unsichtbaren Spektrum, ein optisches Kamerasystem oder ein Lasersystem. Durch diese laufende Überwachung werden durch Blockaden hervorgerufene Schrittverluste des Schrittmotors sofort erkannt. Bei erkannten Schrittverlusten verfährt die Positioniereinheit den beweglichen Heizbandträger automatisch in die Nullposition.

Erst wenn der bewegliche Heizbandträger die Zielposition erreicht hat und dabei kein Schrittverlust und kein unerlaubter Druckanstieg am unbeweglichen Heizbandträger festgestellt wurde, ist der Positionierprozess beendet. Die Positioniereinheiten stellen dann den Solldruck zwischen unbeweglichem und beweglichem Heizbandträger ein. Zur Druckregelung während des Schweißvorgangs kann der Drucksensor bzw. das Wägezellenpaar eingesetzt werden.

Als sehr günstig hat sich für derartige Schweißgeräte ein Antrieb der Positioniereinheit herausgestellt, der einen Schrittmotor aufweist. Möglich wären ebenfalls Hydraulikantriebe, Pneumatikantriebe, Elektro- oder Linearmotoren, wie Gleichstrom- oder Wechselstrommotoren mit Bürsten oder bürstenlose Motoren.

In einer anderen bevorzugten Ausführung des erfindungsgemäßen Verfahrens erfolgt während der eigentlichen Schweißzyklen eine permanente Ausregelung des vorgewählten Anpreßdrucks über die Steuerung durch die Drucksensoren mittels der Positioniereinheit. Durch diese Druckregelung wird eine gleichbleibende Qualität der Schweißverbindung erreicht.

Bei einer bevorzugten Gestaltung des Verfahrens zum Betreiben einer Schweißvorrichtung zum Verschweißen von verschweißbaren Materialien, insbesondere von Folien, vorzugsweise von Kunststoff-Folien in Schlauch- und/oder - Beutelform und/oder anderer schweißbarer Materialien (z.B. innenbeschichtete Alu- und/oder Papierverbundfolie), mit einem ersten beweglichen Heizbandträger, der ein Heizelement trägt und insbesondere mit einem zweiten Heizbandträger, an dem ein Element, insbesondere ein zweites Heizelement oder ein unbeheiztes Element angeordnet ist, wobei der erste bewegliche Heizbandträger durch einen Antrieb mindestens einer Positioniereinheit zwischen einer Öffnungsstellung und einer Schweißstellung verfahrbar ausgeführt ist, ist vorgesehen, dass der bewegliche Heizbandträger verfahren wird, bis ein vorgewählter Anpreßdruck erreicht wird, daß nach Erreichen des vorgewählten Anpreßdrucks die Impulssteuerung eingeschaltet wird und eingeschaltet bleibt bis eine vorgewählte Temperatur erreicht ist, dass nach Erreichen der vorgewählten Temperatur die vorgewählte Schweißzeit beginnt und die Verschweißung erfolgt und die Impulssteuerung eingeschaltet bleibt bis zum Ablauf der vorgewählten Schweißzeit, daß nach Ablauf der vorgewählten Schweißzeit die Impulssteuerung abschaltet und die vorgewählte Kühlzeit beginnt, wobei ein vorgewählter Anpreßdruck aufrechterhalten wird, und dann nach Ablauf der vorgewählten Kühlzeit der bewegliche Heizbandträger in die Öffnungsstellung zurückfährt.

Weiter bevorzugt wird ein Verfahren zum Betreiben eines wärmeimpulsgesteuerten und/oder dauerbeheizten Folienschweiß- und/oder Heißsiegelgerätes mit vorwählbarer elektronischer, prozessorgesteuerter Anpreßdruck- und Temperaturregelung geschaffen, bei dem eine Druckmessung, Drucküberwachung und/oder eine Druckregelung durch Drucksensoren erfolgt. Das Verfahren kann leicht durch eine Software der Steuerung umgesetzt werden.

Eine weiter bevorzugte Ausgestaltung besteht darin, ein Verfahren zum Betreiben eines wärmeimpulsgesteuerten und/oder dauerbeheizten Folienschweiß- und/oder Heißsiegelgerätes zu schaffen, bei dem das Schweiß- und/oder Heißsiegelgerät bei einem Fehler, insbesondere bei einem Fehler während einer Bewegung eines Heizbandträgers zwischen der Öffnungsstellung und der Schweißstellung, einen neuen Schweißvorgang erst startet, wenn ein Bestätigungssignal von einer Bedienperson bzw. einem Anwender ausgelöst wird. Nichtverschlossene Beutel und dergleichen bleiben daher keinesfalls unerkannt oder unbemerkt.

Eine weiter bevorzugte Ausgestaltung liegt darin, ein Verfahren zum Betreiben eines wärmeimpulsgesteuerten und/oder dauerbeheizten Folienschweiß- und/oder Heißsiegelgerätes zu schaffen, bei dem Daten, insbesondere Fehler-, Schweißprozess-, und/oder andere Parameterdaten, auf einem Speichermedium abgespeichert und/oder über eine Schnittstelle, insbesondere über eine USB-Schnittstelle, vorzugsweise durch einen USB-Stick, ausgelesen werden. Die Daten können durch z.B. einen USB-Stick gespeichert und zu Qualitätssicherungs-Zwecken aufbewahrt werden.

Eine weitere Lösung der der Erfindung zugrundeliegenden Aufgabe besteht in der Bereitstellung einer Vorrichtung zur Durchführung des Schweißverfahrens, umfassend einen ersten beweglichen Heizbandträger, der ein Heizelement trägt, und einen zweiten, unbeweglichen Heizbandträger, an dem ein zweites Heizelement oder ein unbeheiztes Element angeordnet ist, wobei der erste bewegliche Heizbandträger durch einen Antrieb mindestens einer Positioniereinheit zwischen einer Öffnungsstellung und einer Schweißstellung verfahrbar ist, wobei mindestens ein Sensor zur Überwachung der Bewegung des Heizbandträgers zwischen der Öffnungsstellung und der Schweißstellung und durch die eine Überwachungssteuerung vorgesehen ist, dadurch gekennzeichnet, dass der mindestens eine Sensor unter dem unbeweglichen Heizbandträger angeordnete und mit der Überwachungssteuerung verbundene Drucksensoren umfasst, und dass der mindestens eine Sensor einen Wegsensor zur Positionserkennung des beweglichen Heizbandträgers umfasst.

### Kurze Beschreibung der Zeichnungen

Ein Ausführungsbeispiel wird anhand der Zeichnungen näher erläutert, wobei weitere vorteilhafte Weiterbildungen der Erfindung und Vorteile derselben beschrieben sind. Es zeigen in rein schematischer Darstellung:
Fig. 1 eine perspektivische Darstellung einer Schweißvorrichtung, und
Fig. 2 ein Blockschaltbild der Steuerung der Schweißvorrichtung.

### Bester Weg zur Ausführung der Erfindung

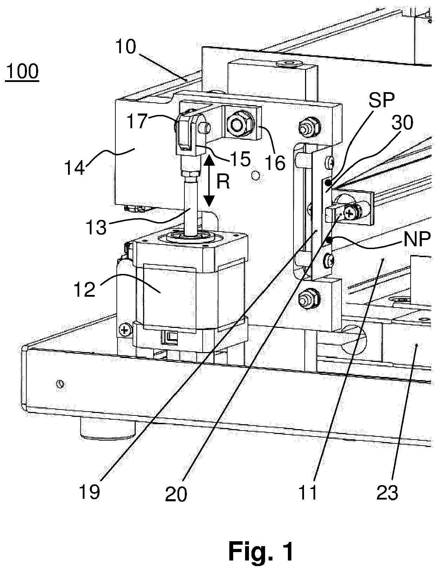

Fig. 1 zeigt eine Schweißvorrichtung 100 zum Verschweißen von Folien in z.B. Schlauch- und/oder Beutelform oder anderer verschweißbarer Materialien, insbesondere von Folien, vorzugsweise von Kunststoff-Folien in Schlauch- und/oder - Beutelform und/oder anderer schweißbarer Materialien (z.B. innenbeschichtete Alu- und/oder Papierverbundfolie), nachfolgend als Folien bezeichnet. Die Folie liegt z.B. als eine doppelte Kunststoffbahn vor, wobei die obere Folie mit der unteren Folie an einer offenen Stelle verschweißt werden soll, um einen Beutel oder eine luftdichte oder vakuumdichte Folienverpackung zu schaffen. Die Vorrichtung kann also ohne Weiteres in einem Vakuumiergerät eingesetzt werden.

Wie die Figur 1 veranschaulicht, umfasst die Vorrichtung in diesem Fall einen oberen beweglichen Heizbandträger 10 mit einem Heizelement. Weiterhin umfasst die Vorrichtung einen unteren Heizbandträger 11 z.B mit einem zweiten Heizelement. Alternativ kann dieses Heizelement ein Verarbeitungselement, wie z.B. eine unbeheizte Prägeleiste oder ein vergleichbares Element sein.

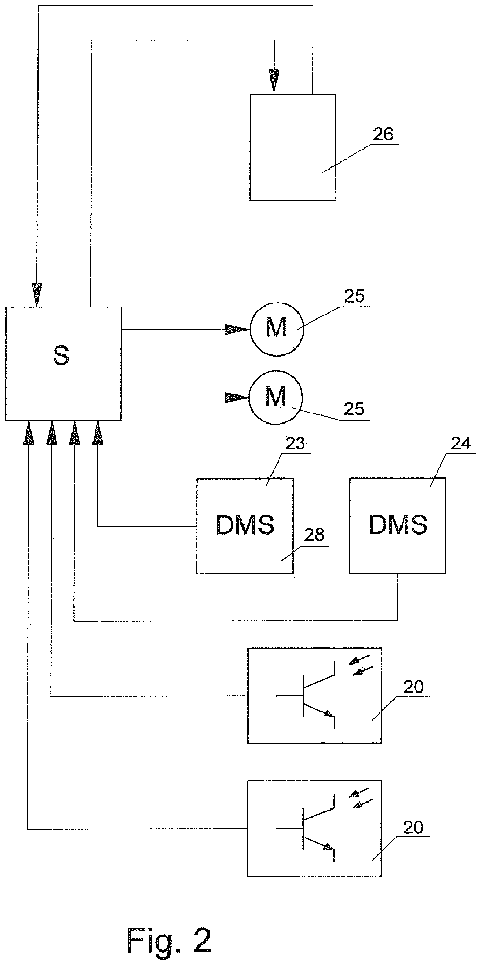

Zu sehen ist außerdem in Fig. 1 eine Positioniereinheit 12 mit einem Schrittmotor 25 (Fig. 2), der innerhalb der Einheit 12 angeordnet ist, und einen Linearantrieb betätigt. Ein Kraftübertragungselement 13 verbindet die Positioniereinheit 12 mit dem oberen Heizbandträger 10 über ein Verbindungselement 14. Das Kraftübertragungselement 13 ist als Betätigungsstift ausgeführt, wobei dieses über ein Kupplungsteil 15 an einem z. B. T-förmigen Träger 16 durch eine Verbindungsschraube 17 mit dem Verbindungselement 14 verbunden ist. Das Verbindungselement 14 ist an einer Seite des Heizbandträgers 10 befestigt bzw. verschraubt. Durch den Doppelpfeil R ist die Bewegungsrichtung des Linearantriebs und des oberen Heizbandträgers 10 angedeutet. Insgesamt sind zwei derartige Positioniereinheiten 12 vorhanden, und zwar rechts und links vom Heizbandträger 10. Die dem oberen Heizbandträger 10 zugeordneten zwei Positioniereinheiten 12 befinden sich im Ruhezustand in einer Nullposition NP. Fig. 1 zeigt eine Stellung zwischen der Nullposition und einer Schweißposition SP.

Der erste bewegliche Heizbandträger wird durch den Antrieb mit den Positioniereinheiten 12 zwischen einer Öffnungsstellung, die der Nullposition entspricht, und der Schweißstellung nach oben oder unten verfahren. Wenn ein Schweißprozess gestartet wird, fährt der obere Heizbandträger in Richtung des unteren Heizbandträgers.

Erfindungsgemäß ist zumindest ein Sensor zur Überwachung der Bewegung zwischen der Öffnungsstellung bzw. Nullposition NP und der Schweißstellung bzw. Schweißposition SP vorhanden. Beide Positionen NP, SP sind in der Zeichnung an einem Element, das als z.B. eine Balkencodefolie ausgeführt ist, die noch näher erläutert wird, eingezeichnet. Die in der Figur vorhandene Position des oberen Heizbandträgers lässt sich anhand eines anderes Elementes ablesen, und zwar anhand einer Lichtschranke 20. Die Lichtschranke 20, die noch näher erläutert wird, und somit auch der obere Heizbandträger befinden sich zwischen der Nullposition NP und der Schweißposition SP.

Vorzugsweise sind Sensoren 20 (Fig. 1), 23, 24 (Fig. 2) vorhanden, die mit einer Überwachungssteuerung S verbunden sind und an diese Sensorsignale ausgeben, wenn ein nicht-zulässiger Betrieb, insbesondere eine Blockade des beweglichen Heizbandträgers 10 vorliegt. Die Überwachungssteuerung S steuert den bzw. die Schrittmotoren 25 und ist so ausgeführt, dass im Falle einer solchen Störung der bewegliche Heizbandträger 10 automatisch in die Nullposition NP zurückfährt. Außerdem ist die Überwachungssteuerung S mit einem Steuerkreis 26 verbunden, wie Fig. 2 zeigt, der die an den Heizbandträgern 10 und/oder 11 befestigten Heizelemente ansteuert bzw. mit der erforderlichen elektrischen Heizenergie versorgt.

Die Sensoren 23, 24 sind Drucksensoren bzw. eine Drucksensoranordnung, da zur Feststellung des zulässigen Betriebs eine Druckmessung erfolgen soll. Die Drucksensoren 23, 24 sind im Bereich eines der Enden des unteren Heizbandträgers 11 angeordnet, wie Fig. 1 zeigt. Die Drucksensoren 23, 24 erfassen den Druck der linken bzw. rechten Seite des Heizbandträgers 11. Jeder Drucksensor ist als Kraftaufnehmer mit einem Federkörper, insbesondere einem Biegebalken und einem Dehnungsmeßstreifen 28 (DMS) ausgeführt. Jeder Drucksensor kann außerdem für einen Maximalwert oder Messbereich von z.B. 100 g bis 1 kg oder entsprechend von 1 N bis 10 N ausgeführt sein. Erfassen die Drucksensoren 23, 24 einen Druckanstieg innerhalb des Verfahrweges zwischen der Nullposition NP und der Schweißposition SP, wird dies als Blockade des oberen Heizbandträgers erkannt. Mit Hilfe der Drucksensoren 23, 24 ist es auch ohne weiteres möglich, in der Schweißstellung SP den Ist-Druck, d.h. den Anpressdruck permanent auf einen vorgewählten Druck-Sollwert auszuregeln. Durch eine Programmsteuerung, die z.B. durch die Steuerung S möglich ist, wird ein Steuersignal für den Schrittmotor 25 ausgegeben.

Durch die Drucksensoren 23, 24 ist es auch möglich, unabhängig von der Überwachung der Bewegung zwischen der Öffnungsstellung bzw. Nullposition NP und der Schweißstellung bzw. Schweißposition SP einen für die Verschweißung erforderlichen Anpressdruck zu messen, zu überwachen und/oder zu regeln bzw. nachzuregeln. Eine Regelung kann elektronisch aber auch mechanisch erfolgen. Die Regelung kann beispielsweise auch über Mikrometerschrauben voreinstellbar und/oder veränderbar sein.

Zur Feststellung des zulässigen Betriebs erfolgt zusätzlich eine optische Messung, und zwar eine laufende optische Überwachung des Verfahrweges. Hierzu ist ein zweiter Sensor 20 (Fig. 2) mit der Steuerung S verbunden. Dieser ist, wie Fig. 1 zeigt, als eine einen Balkencode (30) abtastende Lichtschranke 20 ausgeführt. Der Balkencode (30) ist z. B. auf einer durchsichtigen Folie 19 angeordnet, z.B. aufgedruckt, und besteht aus unterschiedlich dicken Strichen, so dass durch die Lichtschranke eine laufende Erfassung der Position des oberen Heizbandträgers 10 möglich ist. Eine Überwachung des linearen Verfahrweges der Positioniereinheit 12 wird also durch die Lichtschranke 20, die den Balkencode (30) abtastet, realisiert. Dadurch können Schrittverluste des Schrittmotors 25 erkannt werden. Ein Fehler kann nicht nur eine Blockade des oberen Heizbandträgers, sondern auch ein Schrittverlust des Schrittmotors 25 sein.

Wenn ein Schweißprozess gestartet wird, fährt der obere Heizbandträger 10 in Richtung des unteren Heizbandträgers 11. Erst wenn der obere Heizbandträger seine Zielposition störungsfrei erreicht hat und das untere Heizband drucklos ist, startet der Schweißvorgang und die Heizbänder werden für die Dauer einer eingestellten Schweißzeit auf eine vorgewählte Temperatur und Schweißdauer ausgeregelt. Ist der Schweißvorgang abgelaufen, verfährt der obere Heizbandträger in die Nullposition NP zurück.

Die Sensoren 23, 24 dienen auch zur Überwachung der Bewegung zwischen der Öffnungsstellung (Nullposition NP) und der Schweißstellung SP.

## Patentansprüche

1. Schweißverfahren für eine Schweißvorrichtung (100) zum Verschweißen von verschweißbaren Materialien mit einem ersten beweglichen Heizbandträger (10), der ein Heizelement trägt und mit einem zweiten, unbeweglichen Heizbandträger (11), an dem ein zweites Heizelement oder ein unbeheiztes Element angeordnet ist, wobei unter dem unbeweglichen Heizbandträger (11) mit einer Überwachungssteuerung (S) verbundene Drucksensoren (23, 24) angeordnet sind, wobei der erste bewegliche Heizbandträger (10) durch einen Antrieb mindestens einer Positioniereinheit (12) zwischen einer Öffnungsstellung und einer Schweißstellung verfahren wird, wobei eine Bewegung zwischen der Öffnungsstellung und der Schweißstellung mit den Drucksensoren (23, 24) überwacht wird, wobei die Drucksensoren (23, 24) an die Überwachungssteuerung (S) ein oder mehrere Signale ausgeben, wenn ein nicht-zulässiger Betrieb vorliegt, **dadurch gekennzeichnet, dass** ein nicht-zulässiger Betrieb vorliegt, wenn innerhalb der Bewegung zwischen der Öffnungsstellung und der Schweißstellung ein Druckanstieg des unbeweglichen Heizbandträgers (11) durch die Drucksensoren (23, 24) festgestellt wird, und dass eine Positionserkennung des beweglichen Heizbandträgers (10) durch eine laufende optische Überwachung des Verfahrweges erfolgt.

2. Schweißverfahren nach Anspruch 1, **dadurch gekennzeichnet, dass** der nicht-zulässige Betrieb eine Blockade oder eine Klemmung des beweglichen Heizbandträgers (10) ist.

3. Schweißverfahren nach Anspruch 1 oder 2, **dadurch gekennzeichnet, dass** der bewegliche Heizbandträger (10) automatisch in die Öffnungsstellung zurückfährt, wenn der nicht-zulässige Betrieb vorliegt.

4. Schweißverfahren nach einem der vorhergehenden Ansprüche, **dadurch gekennzeichnet, dass** eine Anpreßdruckmessung erfolgt.

5. Schweißverfahren nach einem der vorhergehenden Ansprüche, **dadurch gekennzeichnet, dass** ein Inkrementalwertgeber, ein Absolutwertgeber, ein Potentiometer, ein mechanisches Abtastesystem, eine Lichtintensitätsmessung, ein optisches Kamerasystem und/oder ein Lasersystem zur Erfassung von Verfahrweginformationen eingesetzt wird.

6. Schweißverfahren nach einem der vorhergehenden Ansprüche, **dadurch gekennzeichnet, dass** während mindestens eines Schweißzyklus eine permanente Ausregelung eines vorgewählten Anpreßdrucks über die Überwachungssteuerung (S) durch die Drucksensoren (23, 24) mittels der Positioniereinheit (12) erfolgt, wobei jeder Drucksensor (23, 24) insbesondere eine Wägezelle oder ein Dehnungsmeßstreifen ist.

7. Schweißverfahren nach einem der vorhergehenden Ansprüche, **dadurch gekennzeichnet, daß** der bewegliche Heizbandträger (10) verfahren wird, bis ein vorgewählter Anpreßdruck erreicht wird.

8. Schweißverfahren nach Anspruch 7, **dadurch gekennzeichnet, daß** nach Erreichen des vorgewählten Anpreßdrucks die Impulssteuerung eingeschaltet wird und eingeschaltet bleibt bis eine vorgewählte Temperatur erreicht ist.

9. Schweißverfahren nach einem der vorhergehenden Ansprüche, **dadurch gekennzeichnet, dass** die Schweißvorrichtung ein wärmeimpulsgesteuertes und/oder dauerbeheiztes Folienschweiß- und/oder Heißsiegelgerät ist, wobei eine vorwählbare elektronische, prozessorgesteuerte Anpreßdruck- und Temperaturregelung durchgeführt wird, wobei eine Druckmessung, Drucküberwachung und/oder eine Druckregelung durch die Drucksensoren erfolgt.

10. Schweißverfahren nach Anspruch 9, **dadurch gekennzeichnet, dass** das Schweißgerät bei einem Fehler während der Bewegung des beweglichen Heizbandträgers (10) zwischen der Öffnungsstellung und der Schweißstellung einen neuen Schweißvorgang erst startet, wenn ein Bestätigungssignal von einer Bedienperson bzw. einem Anwender ausgelöst wird.

11. Vorrichtung zur Durchführung des Schweißverfahrens nach einem der vorhergehenden Ansprüche, umfassend einen ersten beweglichen Heizbandträger (10), der ein Heizelement trägt und einen zweiten, unbeweglichen Heizbandträger (11), an dem ein zweites Heizelement oder ein unbeheiztes Element angeordnet ist, wobei der erste bewegliche Heizbandträger (10) durch einen Antrieb mindestens einer Positioniereinheit (12) zwischen einer Öffnungsstellung und einer Schweißstellung verfahrbar ist, wobei mindestens ein Sensor (20, 23 und 24) zur Überwachung der Bewegung des Heizbandträgers (10) zwischen der Öffnungsstellung und der Schweißstellung und eine Überwachungssteuerung (S) vorgesehen sind, **dadurch gekennzeichnet, dass** der mindestens eine Sensor (20, 23, 24) unter dem unbeweglichen Heizbandträger (11) angeordnete und mit der Überwachungssteuerung (S) verbundene Drucksensoren (23, 24) umfasst, und dass der mindestens eine Sensor (20) einen Wegsensor zur Positionserkennung des beweglichen Heizbandträgers (10) umfasst.

12. Vorrichtung nach Anspruch 11, **dadurch gekennzeichnet, dass** ein Inkrementalwertgeber, ein Absolutwertgeber, ein Potentiometer, ein mechanisches Abtastesystem, eine Lichtintensitätsmessung, ein optisches Kamerasystem und/oder ein Lasersystem zur Erfassung von Verfahrweginformationen vorgesehen ist.

13. Vorrichtung nach Anspruch 11 oder 12, **dadurch gekennzeichnet, dass** die Drucksensoren (23, 24) Wägezellen oder Dehnungsmeßstreifen (28) sind, wobei die Drucksensoren (23, 24) im Bereich der Enden des unbeweglichen Heizbandträgers (11) angeordnet sind.

14. Vorrichtung nach einem der Ansprüche 11 bis 13, **dadurch gekennzeichnet, dass** der mindestens eine Sensor (20) eine einen Balkencode (30) abtastende Lichtschranke (20) umfasst.

15. Vorrichtung nach einem der Ansprüche 11 bis 14, **dadurch gekennzeichnet, dass** der Antrieb der Positioniereinheit (12) einen Schrittmotor (25) aufweist.

## Claims

1. Welding method for a welding device (100) for welding weldable materials with a first movable heat tape support (10) carrying a heating element and with a second non-movable heat tape support (11), on which a second heating element or an unheated element is arranged, wherein pressure sensors (23, 24) connected with a monitoring control unit (S) are arranged under the non-movable heat tape support (11), wherein the first movable heat tape support (10) is moved by a drive of at least one positioning unit (12) between an opening position and a welding position, wherein a movement between the opening position and the welding position is monitored by the pressure sensors (23, 24), wherein the pressure sensors (23, 24) transmit one or several signals to the monitoring control unit (S), if a non-permissible operation is executed, **characterized in that** a non-permissible operation is executed if a pressure increase of the non-movable heat tape support (11) within the movement between the opening position and the welding position is detected by the pressure sensors (23, 24), and that a position detection of the movable heat tape support (10) occurs by means of a continuous optical monitoring of the travel.

2. The welding method according to claim 1, **characterized in that** the non-permissible operation is a blockage or a clamping of the movable heat tape support (10).

3. The welding method according to claim 1 or 2, **characterized in that** the movable heat tape support (10) automatically returns into the opening position, if the non-permissible operation is executed.

4. The welding method according to one of the preceding claims, **characterized in that** a contact pressure measurement is carried out.

5. The welding method according to one of the preceding claims, **characterized in that** an incremental encoder, an absolute value encoder, a potentiometer, a mechanical scanning system, a light intensity measurement, an optical camera system and / or a laser system for detecting travel information is used.

6. The welding method according to one of the preceding claims, **characterized in that** during at least one welding cycle, a permanent adjustment of a preselected contact pressure is carried out via a monitoring control unit (S) by the pressure sensors (23, 24), by means of the positioning unit (12), wherein each pressure sensor (23, 24) is in particular a load cell or a strain gauge.

7. The welding method according to one of the preceding claims, **characterized in that** the movable heat tape support (10) is moved until a preselected contact pressure is reached.

8. The welding method according to claim 7, **characterized in that** after reaching the preselected contact pressure, the pulse control is turned on and remains turned on until a preselected temperature is reached.

9. The welding method according to one of the preceding claims, **characterized in that** the welding device is a heat-pulse-controlled and / or permanently heated film welding and / or heat-sealing device, wherein a preselectable, electronic, processor-controlled contact pressure and temperature control is carried out, wherein a pressure measurement, pressure monitoring and / or pressure control by pressure sensors occurs.

10. The welding method according to claim 9, **characterized in that** the welding device, in the event of an error during the movement of the movable heat tape support (10) between the opening position and the welding position, will start a new welding process only when a confirmation signal is triggered by an operator or a user.

11. A device for carrying out the welding method according to one of the preceding claims, comprising a first movable heat tape support (10) carrying a heating element and a second non-movable heat tape support (11), on which a second heating element or an unheated element is arranged, wherein the first movable heat tape support (10) is movable by a drive of at least one positioning unit (12) between an opening position and a welding position, wherein at least one sensor (20, 23, 24) for monitoring the movement of the heat tape support (10) between the opening position and the welding position and a monitoring control unit (S) are provided, **characterized in that** the at least one sensor (20, 23, 24) comprises pressure sensors (23, 24) arranged under the non-movable heat tape support (11) and connected with a monitoring control unit (S), and that the at least one sensor (20) comprises a path sensor for position detecting of the movable heat tape support (10).

12. The device according to claim 11, **characterized in that** an incremental encoder, an absolute value encoder, a potentiometer, a mechanical scanning system, a light intensity measurement, an optical camera system and / or a laser system for recording of travel information is provided.

13. The device according to claim 11 or 12, **characterized in that** the pressure sensors (23, 24) are load cells or strain gauges (28), wherein the pressure sensors (23, 24) are arranged in the region of the ends of the non-movable heat tape support (11).

14. The device according to one of claims 11 to 13, **characterized in that** the at least one sensor (20) comprises a light barrier (20) scanning a bar code (30)

15. The device according to one of claims 11 to 14, **characterized in that** the drive of the positioning unit (12) comprises a step motor (25).

## Revendications

1. Procédé de soudage pour un dispositif de soudage (100) pour le soudage de matériaux soudables avec un premier support mobile de bande chauffante (10) qui porte un élément chauffant et avec un deuxième support non mobile de bande chauffante (11) sur lequel un deuxième élément chauffant ou un élément non chauffé est disposé, dans lequel, sous le support non mobile de bande chauffante (11), des capteurs de pression (23, 24) reliés à une commande de surveillance (S) sont disposés, dans lequel le premier support mobile de bande chauffante (10) est déplacé par un entraînement d'au moins une unité de positionnement (12) entre une position d'ouverture et une position de soudage, dans lequel un déplacement entre la position d'ouverture et la position de soudage est surveillé avec les capteurs de pression (23, 24), dans lequel les capteurs de pression (23, 24) émettent un ou plusieurs signaux à l'attention de la commande de surveillance (S) en cas d'occurrence d'un fonctionnement non autorisé,
**caractérisé en ce qu'**il y a un fonctionnement non autorisé si au cours du déplacement entre la position d'ouverture et la position de soudage, une augmentation de pression du support non mobile de bande chauffante (11) est constatée par les capteurs de pression (23, 24) et qu'il y a une reconnaissance de position du support mobile de bande chauffante (10) par une surveillance optique continue du trajet de déplacement.

2. Procédé de soudage selon la revendication 1, **caractérisé en ce que** le fonctionnement non autorisé est un blocage ou un coincement du support mobile de bande chauffante (10).

3. Procédé de soudage selon la revendication 1 ou 2, **caractérisé en ce que** le support mobile de bande chauffante (10) revient automatiquement dans la position d'ouverture en cas d'occurrence du fonctionnement non autorisé.

4. Procédé de soudage selon l'une des revendications précédentes, **caractérisé en ce qu'**il y a une mesure de pression d'application.

5. Procédé de soudage selon l'une des revendications précédentes, **caractérisé en ce que** l'on utilise un codeur incrémental, un codeur absolu, un potentiomètre, un système de balayage mécanique, une mesure d'intensité lumineuse, un système optique de caméra et/ou un système laser pour la détection d'informations de trajet de déplacement.

6. Procédé de soudage selon l'une des revendications précédentes, **caractérisé en ce que**, pendant au moins un cycle de soudage, il y a une régulation permanente d'une pression d'application présélectionnée via la commande de surveillance (S) par les capteurs de pression (23, 24) au moyen de l'unité de positionnement (12), dans lequel chaque capteur de pression (23, 24) est en particulier une cellule de pesée ou une jauge extensiométrique.

7. Procédé de soudage selon l'une des revendications précédentes, **caractérisé en ce que** le support mobile de bande chauffante (10) est déplacé jusqu'à ce qu'une pression d'application présélectionnée soit atteinte.

8. Procédé de soudage selon la revendication 7, **caractérisé en ce qu'**après avoir atteint la pression d'application présélectionnée, la commande par impulsions est mise en marche et reste en marche jusqu'à l'atteinte d'une température présélectionnée.

9. Procédé de soudage selon l'une des revendications précédentes, **caractérisé en ce que** le dispositif de soudage est un appareil de soudage de feuilles ou de thermocellage commandé par impulsions de chaleur et/ou chauffé dans la durée, dans lequel on réalise une régulation électronique de pression d'application et de température présélectionnable commandée par processeur, dans lequel il y a une mesure de pression, surveillance de pression et/ou une régulation de pression par les capteurs de pression.

10. Procédé de soudage selon la revendication 9, **caractérisé en ce qu'**en cas d'une erreur pendant le déplacement du support mobile de bande chauffante (10) entre la position d'ouverture et la position de soudage, l'appareil de soudage lance un nouveau processus de soudage seulement si un signal de confirmation est déclenché par un opérateur ou un utilisateur.

11. Dispositif pour la mise en oeuvre du procédé de soudage selon l'une des revendications précédentes, comprenant un premier support mobile de bande chauffante (10) qui porte un élément chauffant et un deuxième support non mobile de bande chauffante (11) sur lequel un deuxième élément chauffant ou un élément non chauffé est disposé, dans lequel le premier support mobile de bande chauffante (10) est déplaçable par un entraînement d'au moins une unité de positionnement (12) entre une position d'ouverture et une position de soudage, dans lequel au moins un capteur (20, 23 et 24) pour la surveillance du déplacement du support de bande chauffante (10) entre la position d'ouverture et la position de soudage et une commande de surveillance (S) sont prévus,
**caractérisé en ce que** l'au moins un capteur (20, 23, 24) est disposé sous le support non mobile de bande chauffante (11) et comprend des capteurs de pression (23, 24) reliés à la commande de surveillance (S), et que l'au moins un capteur (20) comprend un capteur de course pour la reconnaissance de position du support mobile de bande chauffante (10).

12. Dispositif selon la revendication 11, **caractérisé en ce que** l'on prévoit un codeur incrémental, un codeur absolu, un potentiomètre, un système de balayage mécanique, une mesure d'intensité lumineuse, un système optique de caméra et/ou un système laser pour la détection d'informations de trajet de déplacement.

13. Dispositif selon la revendication 11 ou 12, **caractérisé en ce que** les capteurs de pression (23, 24) sont des cellules de pesée ou des jauges extensiométriques (28), dans lequel les capteurs de pression (23, 24) sont disposés dans la zone des extrémités du support non mobile de bande chauffante (11).

14. Dispositif selon l'une des revendications 11 à 13, **caractérisé en ce que** l'au moins un capteur (20) comprend une barrière lumineuse (20) balayant un code à barres (30).

15. Dispositif selon l'une des revendications 11 à 14, **caractérisé en ce que** l'entraînement de l'unité de positionnement (12) présente un moteur pas à pas (25).
